Europäisches Patentamt

European Patent Office

Office européen des brevets

(11) Publication number: **0 234 876 B1**

# EUROPEAN PATENT SPECIFICATION

(45) Date of publication of patent specification: **02.09.92** (51) Int. Cl.5: **B01D 3/22**

(21) Application number: **87301454.2**

(22) Date of filing: **19.02.87**

A request to add a second HU priority no 68986
of December 10,86 has been filed on 310387.

(54) **Process and apparatus to establish contact between liquid and vapour or gas, particularly in distillation and or absoorption columns.**

(30) Priority: **19.02.86 HU 68986**
      **10.12.86 HU 69886**

(43) Date of publication of application:
     **02.09.87 Bulletin  87/36**

(45) Publication of the grant of the patent:
     **02.09.92 Bulletin  92/36**

(84) Designated Contracting States:
     **AT BE CH DE ES FR GB GR IT LI LU NL SE**

(56) References cited:
     DE-C- 903 447          FR-A- 2 119 425
     US-A- 2 693 949        US-A- 2 809 821
     US-A- 3 282 576        US-A- 4 301 098

(73) Proprietor: **INNOFINANCE Altalános Innovácios Pénzintézet**
     **Szabadság tér 5-6**
     **H-1054 Budapest V(HU)**

(72) Inventor: **Gyökhegyi, Lászl**
     **Mányoki ut 5**
     **H-1118 Budapest(HU)**
     Inventor: **Boronyák, Imre**
     **Sallai I. u. 30/b**
     **H-1136 Budapest(HU)**

(74) Representative: **Gold, Tibor Zoltán et al**
     **Stephenson Harwood One, St. Paul's**
     **Churchyard**
     **London EC4M 8SH(GB)**

EP 0 234 876 B1

## Description

The invention relates to a process and apparatus for establishing contact between liquid and vapour or gas, on trays, e.g. as used in distillation and/or absorption columns.

As is known, in order to establish intensive contact between the ascending vapour or gas and the downflowing liquid on the active surfaces of trays used in columns for carrying out distillation and absorption, generally the same elements (e.g. bells, valves, or holes) are used, the individual dimensions of which are identical on the whole active surface of each tray. The "active surface" of a given tray is the area of the tray reduced by the inlet and downflow areas.

Some tray constructions are also known wherein several types of the mentioned contacting elements are used simultaneously. Such is, for example, the sieve- or valve-type tray, which - beside the valve on the tray - is provided with separate holes. This group includes the so-called "co-current" trays, on the active surface of which there are evenly distributed, or used at increasing rate in the main flow direction of the liquid, contacting elements which have the effect that in use the exit velocity or impulse of the vapour or gas flow has a horizontal component in the flow direction of the liquid. The flow direction of the vapour or gas immediately after exit from the contacting elements on these trays is the same as the main direction of the flow rate, hence the vapour or gas flow does not induce recirculation of the liquid, in contrast with the bell-, or valve-type trays. Such co-current tray is described in the DE-B-1 632 219. The tray is provided with tongues pressed out from the sheet metal of the tray. According to the DE-B-3 417 975, the co-current slotted sieve tray is provided with orifices formed in the sheet metal, and arranged between the holes of the traditional sieve-tray. The special contacting elements of both trays protrude from the plane of the tray and thus they obturate the flow. The circular segment-shaped areas are generally adjacent to the active surface of the trays serving for the inlet and outlet of the flow. A downflow weir can be arranged at the boundary of the active tray-surface and the downflow area of the liquid.

Stagnant zones - dead spots - represent a drawback for all the known tray constructions, because there no contact exists between the two phases. These dead spots cannot be wholly eliminated for constructional reasons.

All the above-described tray constructions have only a single function, namely to bubble the ascending vapour or gas through the liquid layer conducted generally in cross-flow on the tray.

It is known, however, that the compositions of the vapour or gas ascending from the trays of the distillation and/or absorption columns, as well as those of the liquid leaving the trays are not in thermodynamic balance ; in other words the efficiency of trays of known construction is lower than that of a theoretical tray. The reason for this - according to the generally accepted molecular diffusion theory - is that the balance between the liquid vapour or gas would require infinitely long contact time and infinitely large contact surface. At the same time, the vapour or gas flow should mix perfectly with the liquid on the tray. The presently known trays are not capable of satisfying these requirements and their efficiency, i.e. separating capacity, is reduced by the stagnant zones (dead spots), thus it is automatically lower than the theoretically possible maximum separating capacity.

Similar problems crop up in other cases of contacting gas and liquid, e.g. in the aeration of waste water, or other water to be treated.

US-A-4 301 098 describes vapour-liquid contacting apparatus in which a perforated tray is provided with an inverted V-shaped baffle in an inlet zone of the liquid which tends to decelerate liquid flow across the tray. It has been found that baffles of this configuration, without the use of other liquid flow accelerating elements, are disadvantageous because their extra surface area considerably increases the total tray surface and decreases the active contact surface; moreover, for use in operating the process according to the present invention such sloping baffles require a relatively large liquid layer thickness which is not only difficult to achieve but which undesirably increases the pressure drop across a given tray as well as increasing the minimum size of the vertical spacing between two superposed trays in a column.

From US-A-3 282 576 a liquid-vapour contacting tray construction is known which utilizes a perforated multiplanar tray element in conjunction with a downcomer element. The resulting structure is somewhat complex, requiring the tray element to be fabricated in a relatively large number of manufacturing steps. The tray element includes means for decelerating the liquid in the inlet zone. In addition, the comments made above in relation to US-A-4 301 098 apply to this U.S. patent specification also.

Another known apparatus disclosing perforated trays for contacting gases and liquids and including liquid flow accelerating means is FR-A-2 119 425. However, this known apparatus also includes structural elements in the liquid inlet zone which have the effect of decelerating the liquid flow in that zone because the structural elements project upwardly from the horizontal plane of the tray.

Fig. 4 of US-A-2 693 949 discloses in a highly diagrammatic form, and the corresponding description in a rather abbreviated form, gas-liquid contacting apparatus with a perforated planar tray. The inlet area of the tray is fitted with ducting above the tray to blow vapours across the tray so as to impart thrust to the flow of liquid on the tray. The exact physical configuration of the tray and of the ducting are not described and there is no indication of the geometry of the perforations.

An object of the present invention is to provide a process and apparatus for contacting vapour or gas and liquid, wherein the contact is more efficient than that of the earlier solutions, and results in a balanced or nearly balanced operation of the trays in columns used e.g. for carrying out distillation and/or absorption, and thus in greatly improved efficiency in contacting the phases with each other.

According to one aspect of this invention, there is provided a process which is as claimed in claim 1.

According to another aspect of the invention, there is provided apparatus which is as claimed in claim 9.

Paraphrasing the invention as claimed, it has been found that if the velocity of the flow conducted on a uniplanar tray is increased to a value exceeding the velocity of the vapour or gas bubbles ascending from the liquid as a result of the buoyancy effect, while a turbulent liquid flow of lower velocity than this limit velocity is produced in the domain of the tray before the downflow area, then a balanced or nearly balanced operation of the tray, and thus an improved efficiency to a theoretical, i.e. balanced, tray.

In other words, in the course of conducting the vapour and/or gas upwards, it is admitted into a liquid layer on a tray, and in the domain of tray towards the liquid inlet, a liquid movement is brought about the velocity of which exceeds that of the vapour or gas bubbles ascending from the liquid upon the buoyant effect, while in the domain of the tray towards the downflow, a flow rate of lower velocity than that of the vapour or gas bubbles ascending from the liquid upon the buoyant effect and of layer thickness exceeding that of the liquid on the inlet side is produced. Thus the velocity of the liquid arriving on the tray is first increased over a limit value, then slowing down the accelerated flow rate - for example with downflow weir - below the mentioned limit value, a turbulent mass of liquid with considerably greater layer thickness is produced. Generally the liquid in the inlet domain of the tray is accelerated to a velocity of at least 0.1 m/s, preferably to 0.3 m/s; these are the velocity limit values of the ascending vapour or gas bubbles, depending primarily on the properties of the liquid such as its density, viscosity, surface tension. Generally the accelerated liquid is conducted in a layer of maximum 1-10 mm thickness.

According to a preferred embodiment of the invention, the liquid flowing onto the tray is accelerated by vapour or gas jets admitted into the liquid from below, having horizontal component oriented from the inlet towards the downflow, and/or with the aid of inclined tray-sections sloping towards the downflow weir.

According to another preferred embodiment, the liquid flowing on to the tray subjected to supplementary acceleration with the aid of a slot disposed in said inlet zone above the plane of the tray, and with the aid of vapour and/or gas jets admitted into the liquid from below and having a horizontal component oriented from the inlet towards the downflow.

According to a preferred embodiment, the liquid flowing on to the tray is additionally accelerated with a slot above the plane of the tray.

Furthermore, it may be advantageous to accelerate the liquid several times along several lines spaced from each other in the domain of the tray between the inlet, e.g. inlet weir, and the downflow.

According to a further preferred variant, a flow of greater layer thickness and lower velocity is produced with vapour and/or gas jets admitted into the liquid in the domain of the downflow, having suitably a horizontal component oriented towards the interior of the tray.

Aa further embodiment of the apparatus is characterized in that the liquid-accelerating means are supplemented by a slot above the plane of the tray, in the domain of the inlet, ensuring the even distribution of the liquid as well.

Yet another embodiment is characterized in that it is provided with a downflow weir extending over the plane of the tray in the vicinity of the said outlet.

A further embodiment is characterized in that it is provided in the vicinity of the said outlet with means, e.g. baffle elements arranged above, or extending at most up to the upper plane of the tray, to constitute said decelerating means, for the induction of vapour and/or gas jets into the liquid, said jets having a suitable horizontal component and being directed oppositely to the direction of the main liquid flow direction.

Further details of the invention will be described more particularly by way of example with the aid of the accompanying drawings showing the preferred embodiments of the process and apparatus, as follows:

Figure 1    is a vertical sectional view along lines 1-1 marked in Figure 2, showing a first embodiment of the tray according to the invention,

Figure 2    is a top plan view of the tray shown in Figure 1,

Figure 3 is a top plan view of a further embodiment of the tray,

Figure 4 is a vertical sectional view along line IV-IV marked in Figure 5, showing a further embodiment of the tray, similar to the one in Figure 1,

Figure 5 is a top plan view of the tray shown in Figure 4; and

Figure 6 is the perspective view of a further embodiment of the tray.

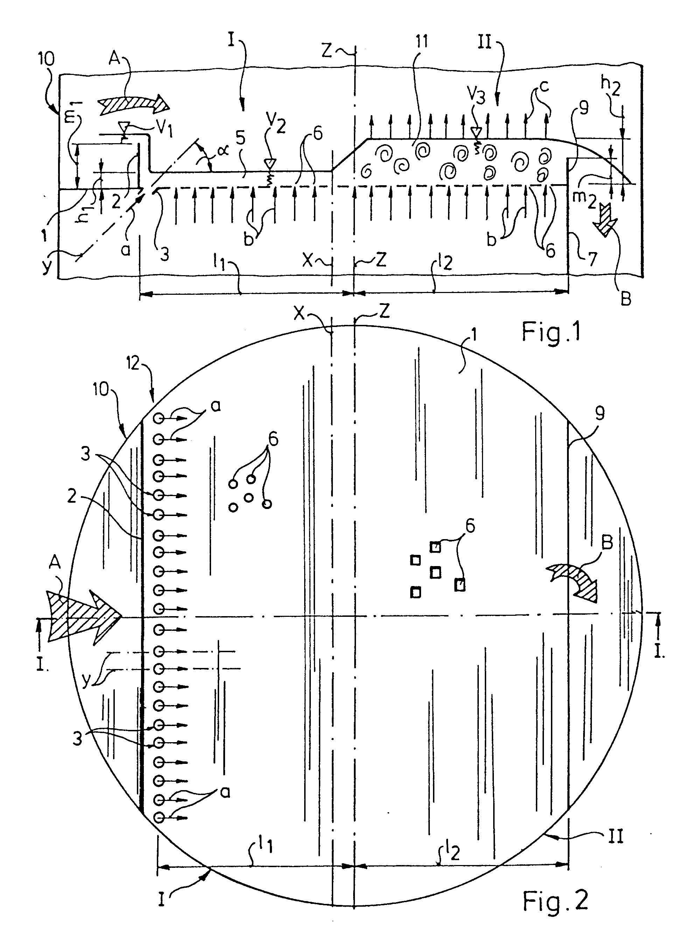

The circular, uniplanar tray 1 shown in Figures 1 and 2 is mounted in conventional way into a vertical and cylindrical column 10. On the inlet side (arrow A) of the liquid to be contacted with vapour or gas, an inlet weir 2 of height $m_1$ extends parallel with the vertical geometrical medium plane x perpendicular to the main flow direction A of the liquid, and perpendicular to the plane of tray 1. A similarly vertical downflow weir 9 extends on the opposite side of the tray, running parallel with the inlet weir 2. The height $m_2$ of the weir 9 is in this embodiment less than the height $m_1$ of the inlet weir 2. The active surface or domain of the tray 1 is considered to be that between the weirs 2 and 9. Weir 9 is formed by an upper strip of vertical wall 7 in the interior of column 10.

Liquid-accelerating elements 3 are built into the tray 1. Here, they are vapour or gas induction slots or holes 3 which are provided with an inclined axis y, arranged in one or several rows 12 running parallel with but inwardly of the inlet weir 2, i.e. in the active domain of the tray 1. The axis y is inclined towards the active domain at an angle $\alpha$ to the upper plane of tray 1, here an acute angle. In plan view projection the axes y are perpendicular to the weir 2. In use, vapour or gas flows upwardly through the liquid-accelerating elements 3 into a liquid layer 5 on the tray 1 and at an angle according to arrows a, and forwardly in respect of the flow direction A of the liquid.

The liquid-accelerating elements 3 may be formed, for example, by inclined axial eyes described in the HU-B- 186 652, but other elements may also be used, e.g. elements machined by cutting and lateral bending from the plane of the sheet metal, to conduct the gas jets upwardly at an angle or horizontally into the liquid.

In the horizontal domain of the tray 1, gas or vapour induction elements 6 are arranged everywhere, formed by vertical axial holes in the present embodiment. The cross-sectional shape of these holes may vary, e.g. circular, quadrangular, etc. The spacing of the holes 6 from each other may also vary.

For the sake of a better overall view, only a few holes 6 of circular or square cross-section are shown in Figure 2. The flow direction of the gas or vapour phase passing upwards through the holes 6 into the liquid 5 on the tray 1 is represented by arrows b in Figure 1. It is noted that the axis of these holes may point upwardly at an angle in the flow direction of the liquid.

The contact between the liquid and gas or vapour on the tray 1 shown in Figure 1 and 2 takes place as follows:

The liquid arriving at height $v_1$ from the direction of arrow A flows over the inlet weir 2 and passes to the active surface of the tray 1, where it flows in a layer thickness $h_1$ at liquid level $v_2$ which is lower than $v_1$, towards the downflow weir 9. The flow velocity of the liquid is increased by the gas or vapour flowing through the liquid-accelerating element(s) 3 - by transmitting the impulse of the ascending gas or vapour flow - to such an extent as to exceed the velocity of the vapour or gas bubbles ascending from the liquid under the buoyant effect, by a value which - depending on the physical properties (density, viscosity, surface tension) of the admitted liquid - is generally 0.1-0.3 m/s. The thickness $h_1$ of the liquid layer 5 is only a few mm. The flow accelerated over the limit velocity in this thin layer entrains the gas or vapour bubbles entering through the gas or vapour inlet holes 6 in the direction of arrows b, and meanwhile the bubbles are comminuted by the arising co-current high shear stress.

The liquid layer 5 accelerated over the limit velocity extends over only the side of the tray 1 closer to the liquid inlet, and it occupies only a certain proportion of the active tray-surface, depending on the velocity, on the physical characteristics of the liquid, and on factors reducing the liquid velocity, e.g. viscosity, roughness of the tray and column-wall, as well as on the construction of the tray and column (e.g. contact elements protruding occasionally from the plane of the tray, etc). This intermediate domain of the active surface extends between the inlet weir 2 and a vertical plane z parallel with weirs 2 and 9 and lying slightly past the centre plane x towards the downflow weir 9; its theoretical length is designated by $l_1$ in Figure 1 and 2. Because of its function, this domain is termed the acceleration zone I of the tray 1. The velocity vectors in the acceleration zone I are parallel with each other and point in the direction of the downflow weir 9.

The high velocity liquid impinges perpendicularly on the downflow weir 9 and a turbulent liquid flow is produced by a certain part of its impulse in the zone of length $l_2$ upstream of the downflow weir 9. In this zone, the flow of height $h_2$ and of level $v_3$ exceeds the level $v_2$, and its velocity is lower than the limit velocity of the ascending bubbles, where the velocity vectors of the liquid are no longer parallel with each other. The liquid layer in this zone is designated by II; its thickness (depth) $h_2$

exceeds both the thickness $h_1$ and the height $m_2$ of the downflow weir 9. This zone of length $l_2$ extending between the vertical plane $z$ and the downflow weir 9 may be termed the degasifying zone II of the tray in view of its function. This is because the slowing down of the liquid below the limit value in the degasifying zone II results, on the one hand, in liberation of the vapour or gas bubbles entrained in and conducted from the accelerating zone, and on the other hand, in liberation of the bubbles arising from the vapour or gas flow conducted upwards through holes 6 (arrows b) in section $l_2$ into the turbulent liquid layer 11. In this degasifying zone the turbulent liquid movement brings about mostly shear stresses, comminuting the emerging bubbles. The comminuted tiny bubbles are liberated and ascend in a uniform density over the whole area of the degasifying zone II, i.e. between the contacting elements, e.g. holes and in the stagnant zones (dead spots) too, developing on the edges of the circular cross-sectional tray, whereby the turbulence of the liquid layer 11 is further increased. Since the turbulence of the liquid is high in the degasifying zone, complete mixing takes place without stagnant zones (dead spots). Since a perfect mixing of the phases means a theoretically balanced tray, the degasifying zone II represents a theoretical tray-equivalence.

The vapour or gas bubbles leave the liquid layer 11 in the direction of arrows $c$ (Figure 1), while the liquid flowing over the downflow weir 9 leaves the tray 1 in the direction of arrow B.

In view of the foregoing, a double function - resulting in balanced operation - is realized on the active surface of the tray according to the invention: partly the velocity of the flow conducted on the tray is increased, and partly the velocity of the accelerated liquid is slowed down by the downflow weir, whereby intensive mixing of the vapour or gas phase and the liquid phase is accomplished. It is to be noted that the transition between the accelerating zone I and degasifying zone II is fairly short; however, the plane $z$ represents only a theoretical boundary between the two zones, and on either side of the plane $z$ the characteristic parameters of both said zones may prevail, albeit only to a minimal extent and over a minimal distance therefrom.

The total pressure drop on the double functioning, balanced tray 1 according to the invention is lower than on other trays under the same conditions. The reason for this is found in the double function according to the invention. Namely, in the accelerating zone 1 the surface of tray 1 is covered only with a thin liquid layer 5, hence the pressure drop taking place in the vapour or gas flow is greater only by the hydrostatic pressure of the few mm thick liquid layer 5 than the so-called "dry" pressure drop of the tray 1. Accordingly, the total amount of the vapour or gas flow conducted on to the tray 1 is liberated in the form of evenly distributed tiny bubbles in the degasifying zone II. Here the liquid is aerated to a great extent. Thus its density is only 40% of that of the liquid conducted on to the tray 1. Consequently in the degasifying zone II the total pressure drop taking place in the vapour or gas flow, is influenced - besides the so-called dry pressure drop of tray 1 - by the hydrostatic pressure of the considerably aerated liquid layer.

In view of the foregoing, the total pressure drop occurring jointly in the accelerating zone I and degasifying zone II is lower than the pressure drop of the presently known and used trays fulfilling only one function, and in which the liquid or the tray is aerated to a lesser extent.

It is an important and favourable property of the tray according to the invention that the double function, taking place by acceleration of the liquid and by impinging the high-velocity liquid on the downflow weir 9, prevails over the whole functional domain of the tray 1 (e.g. from cessation of flow through the holes to atomization of the liquid on the tray). This also means that the balanced functioning of the tray 1 is independent of changes in velocity of the vapour or gas within the functional domain.

As mentioned before, the length of the accelerating zone 1 in Figures 1 and 2 is determined for a given construction by the accelerated velocity of the flow, and the resistances reducing the velocity of the liquid (viscosity, roughness of the tray and column surface, contact elements occasionally protruding from the plane of the tray). These resistances, as well as the comminution of the bubbles arising from the vapour or gas flow admitted into the accelerating zone, and the transmitted impulse jointly result in reducing the already once accelerated velocity of the liquid to the limit- or lower velocity. In order to prevent this, it is advisable to increase the liquid velocity on the active surface of the tray at least once from time to time. This way the accelerating zone can be formed even on large diameter trays, moreover its length can be increased from time to time.

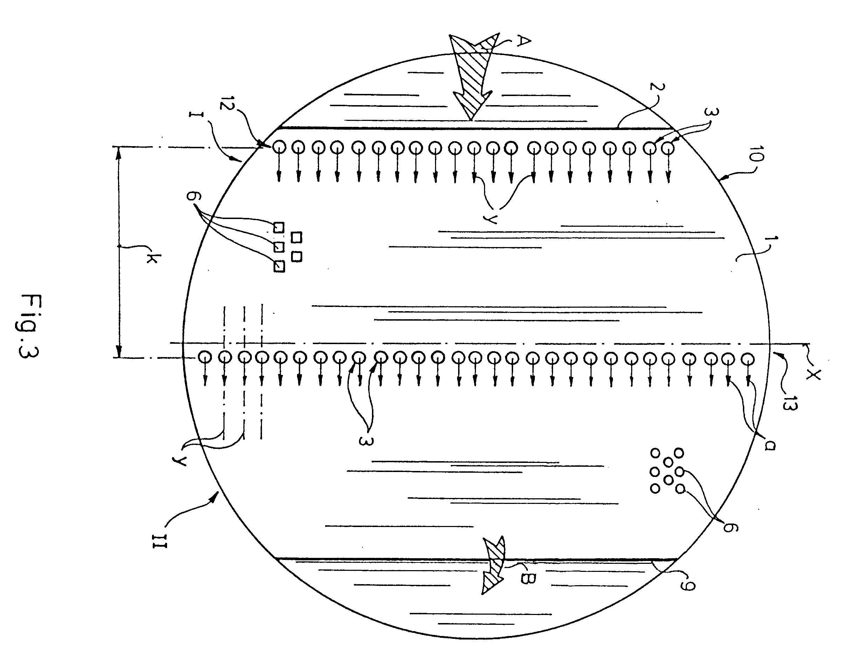

Acceleration of the liquid velocity at an intermediate zone of the tray 1 shown in Figure 1 may be accomplished by means of the apparatus shown in Figure 3, that is, by including a second row 13 of liquid-accelerating elements 3, running parallel with and at a distance k from the first liquid-accelerating row of elements 12. The liquid-accelerating elements 3 in row 13 are identical with those in row 12 and the other structural elements of the tray are designated with the reference numbers used in Figures 1 and 2. The liquid-accelerating elements 3 in row 12 accelerate the liquid to the required velocity; then the flow slowed down below the limit velocity in the wake of the friction arising on the contact surfaces and in the liquid, as well as upon impact with the ascending gas or vapour through the gas or vapour-admitting elements 6 (holes), is accelerated again to the velocity exceeding the limit velocity by the liquid-accelerating row of elements 13, which have axes $\underline{y}$ extending upwardly at an angle. In this case also the flow impinges on the downflow weir 9, made of sheet metal, causing the formation of the accelerating zone I and degasifying zone II. The liquid then leaves the tray 1 in the direction of arrow B. Evidently, the distance k between the liquid-accelerating rows of elements 12 and 13 has to be selected with due regard to the reduced velocity of the flow caused by the resistances, without reducing the velocity in the domain between the lines 12 and 13 below their earlier defined limit value. (The distance k may be the same or nearly the same as the spacing $l_1$ shown in Figures 1 and 2). It also stands to reason that - besides the given flow rate and tray dimensions - several liquid-accelerating row of elements may be built into the tray, as appropriate.

The lengths of the accelerating and degasifying zones on the tray according to the invention are variable. If the height $m_2$ of the downflow weir 9 of tray 1 in Figures 1 and 2 is constant, the length $l_1$ of the accelerating zone I increases according to the velocity of the liquid, while the length $l_2$ of the degasifying zone II decreases. At the same time the thickness $h_1$ of the liquid layer 5 in the accelerating zone will be reduced and the depth $h_2$ of the liquid layer II in the degasifying zone will increase. If the liquid velocity is constant, the length $l_2$ of the degasifying zone II can be increased with the height $m_2$ of the downflow weir 9, while the thicknesses $h_1$ and $h_2$ of the liquid layers 5, 11 remain the same in both zones I, II.

The height of the downflow weir 9 required to bring about the degasifying zone and process is generally 5-80 mm, preferably between 15 and 40 mm, depending on the exit of the gas or vapour flow leaving the elements used for acceleration of the liquid, and on the angle ($\beta$) of the slipway .

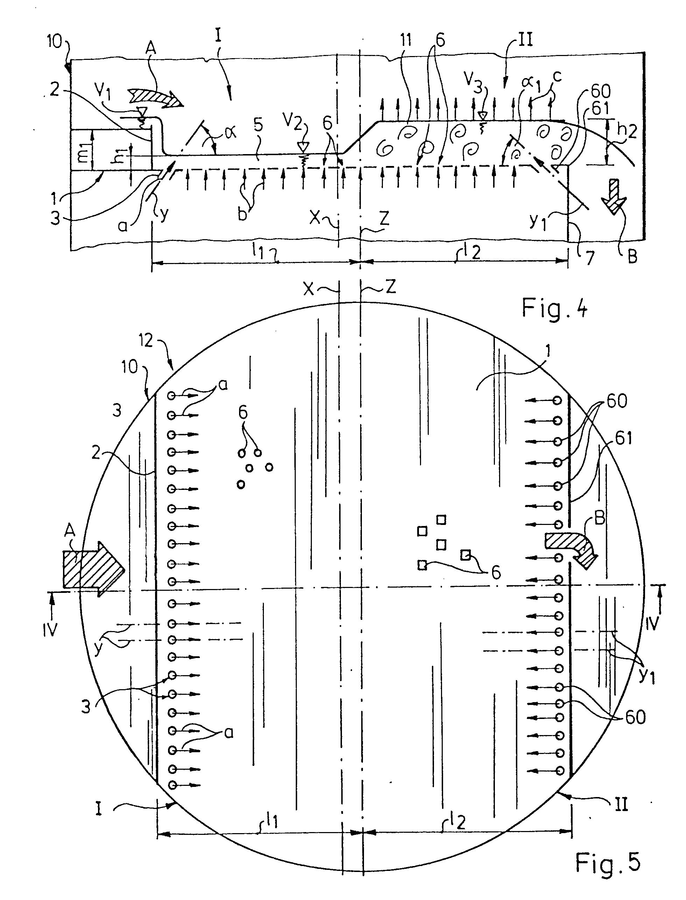

The uniplanar tray in Figures 4 and 5 differs from that shown in Figures 1 and 2, in that it has no solid downflow weir structure, but instead vapour or gas flow with a component opposite to the main flow direction of the liquid is conducted into the liquid in the region of the downflow edge 61 in order to reduce the velocity of the liquid and to obtain the turbulent liquid layer 11 of increased height $h_2$. The direction of the vapour or gas flow is marked with dash-dot line and arrow $y_1$; the absolute value of the angle $\alpha_1$ to the horizontal may be identical with the angle $\alpha$ of the vapour and/or gas jets $\underline{y}$ injected through the liquid-accelerating elements 3, but its direction $y_1$ is naturally opposite to the direction $\underline{y}$. Decelerating elements 60 used for injection of the $y_1$-oriented vapour and/or gas jets are formed by inclined axial eyes described, for example, in HU -B-186 652. However, other decelerating elements machined by cutting and lateral bending from the plane of the sheet metal may also be used to conduct the gas and/or vapour jets upwardly at an angle, or horizontally, into the liquid. In the case of a suitably thick tray, inclined axial holes would be sufficient for the injection of the decelerating $y_1$-oriented gas jets.

In other respects, contact between the liquid and gas or vapour phase on the tray shown in Figures 4 and 5 is the same as that described in connection with Figures 1 and 2, and the processes taking place there are also the same.

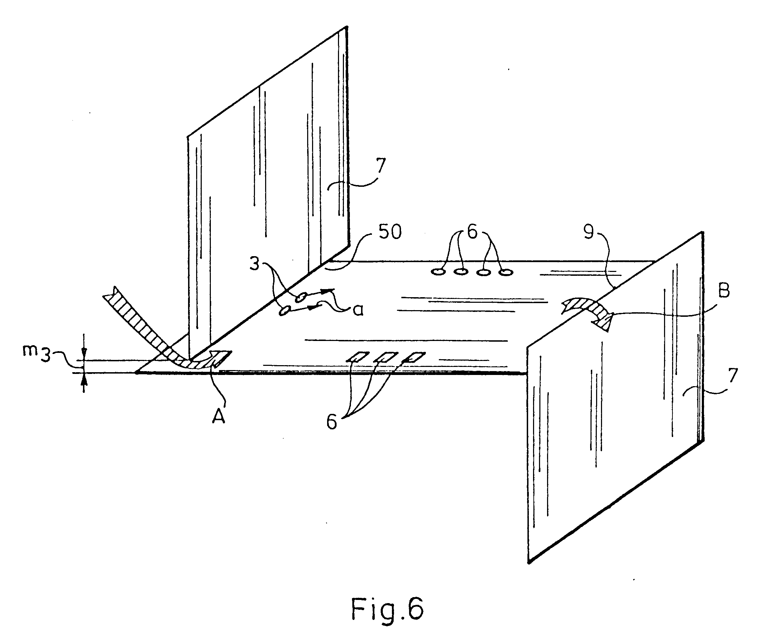

The embodiment in Figure 6 differs from that shown in Figures 1 and 2 in that the liquid arrives on uniplanar tray 1 without flowing over a weir; instead, it flows through a slot 50 in the interior of the column below the wall 7, evenly distributed as shown by arrows A. In this case the lower edge of wall 7 extends above the plane of tray 1 at a distance $m_3$. The length of the slot 50 is the same as the length of the wall 7 and in this way the velocity of the liquid flowing through may be influenced by selection of the area of the slot 50. The slot 50 by itself is not capable to assure a lower limit value of the liquid flow on the tray of e.g. 0.3 m/s, hence the slot has to be combined with liquid-accelerating elements, e.g. inclined axial eyes 3. The sheet metal 7 below the slot 50 is formed by the downflow sheet of the tray situated above the tray 1 in the column according to Figure 6, but it is conceivable that the downflow sheet 7 above the plane of the tray 1 has a suitably horizontal slot for accelerating of the liquid. In any case, the same flow conditions and processes take place on the tray 1 as described in connection with Figures 1 and 2, and the identical structural elements are designated with the already used reference numbers.

The advantages of the invention are the following:

From technological point of view, the high efficiency of the uniplanar trays embodied in the invention is an evident advantage. The reason for this is the very intensive mixing of the liquid with the vapour or gas conducted to the tray, taking place in the degasifying zone without stagnant zones (dead spots). The theoretically attainable 100% efficiency is spoiled only by the secondary influence of the liquid drops entrained with the vapour or gas flow to a slight extent so that the efficiency of the tray according to the invention is in practice higher than 90%, independently of the physical properties of the mixture to be separated.

A further advantage is that the accelerating and degasifying function of the uniplanar tray embodied in the invention prevails in a stable operational domain of the tray, assuming the constant ratio of the vapour or gas flow and the flow rate. Thus the extremely high efficiency remains constant in the whole operational domain of the tray. Besides, the efficiency is essentially independent of the physical properites of the mixture to be separated.

The vapour or gas flow ascending in the column from one tray to another one above it suffers directional change while passing through the elements serving for acceleration of the flow rate, whereby a considerable part of the liquid drops entrained by the vapour or gas flow cannot reach the tray. This results in the advantage that in the case of the trays according to the invention a spacing of about 350 mm between the trays is sufficient against the entrainment, contrary to the traditionally used 450-600 mm tray spacing.

Another favourable property of the uniplanar tray embodied in the invention is that, in contrast with the trays of traditional construction and function, the pressure drop is lower under comparable conditions. This is advantageous mainly in case of vacuum distillation, and of columns built with large number of trays or series-connected with each other. Thus in the case of vacuum distillation exceeding the permissible maximum value of the total pressure prevailing at the bottom of the column, thermic damage of the bottom product results. Besides this, the small pressure drop in each tray will allow in every case the use of heating medium of low energy content.

Yet another advantage is that the change in the pressure drop occuring on the uniplanar trays embodied in the invention under identical conditions is less dependent on the change in the vapour or gas velocity than in case of the known tray constructions fulfilling only one function.

From an operational point of view it is an advantage that the main source of faults namely moving parts exposed to wear, are not used in the tray according to the invention.

A column consisting of uniplanar trays embodied in the invention is considerably more favourable in respect of the cost of investment and operation than the presently known columns.

Naturally the invention is not restricted to the examples described in the present disclosure, but it can be realized in many other ways within the scope of the claims appended hereto.

## Claims

1. A process for contacting a liquid and a vapour and/or a gas on a tray containing vapour or gas-transmitting holes, in the course of which the vapour and/or gas is or are conducted upwardly into the liquid flowing across the tray from an inlet (A) to an outlet (B), characterised in that the tray (1) is uniplanar and in a first zone (I) thereof nearer the tray liquid inlet (A) than the outlet (B) the liquid (5) is subjected exclusively to acceleration to a velocity exceeding that of the vapour and/or gas bubbles ascending in the liquid due to the buoyant effect while in another zone (II) of the tray (1) nearer the outlet (B) than the said inlet (A) the liquid is decelerated to a velocity lower than that of the said ascending vapour and/or gas bubbles; and further characterised in that the layer thickness ($h_2$) of the flow in said another zone (II) exceeds the layer thickness ($h_1$) of the liquid in the said first zone (I).

2. The process as claimed in claim 1, characterised in that the liquid (5) is accelerated to a velocity of at least 0.1 m/s, preferably to at least 0.3 m/s velocity, in the said first zone (I).

3. The process as claimed in claim 1 or 2, characterised in that the accelerated liquid (5) is conducted in a layer ($h_1$) of maximum 1-10 mm thickness.

4. The process as claimed in any preceding claim, characterised in that in said first zone (I) the liquid is accelerated by passing through at least one row of apertures (3) in said tray (1) transverse to the direction of flow on said tray (1), said at least one row of apertures (3) being nearer said inlet (A) than said outlet (B); and in that said apertures (3) each have a geometrical axis (y) inclined at a positive angle ($\alpha$) to the surface of the tray (1) and (when considered in top plan view) towards the said outlet (B).

5. The process as claimed in any preceding claim, characterised in that the liquid (5) flowing on the tray (1) is subjected to supplementary acceleration with the aid of a slot (50) disposed in said inlet zone (I) above the plane of the tray (1).

6. The process as claimed in any preceding claim, characterised in that the liquid is accelerated a plurality of times at a corresponding plurality of locations, spaced along the tray (1) by distances (k) from each other between the said inlet (A), e.g. an inlet weir (2), and the said outlet (B).

7. The process as claimed in any preceding claim, characterised in that the flow parameters in said another zone (II) are brought about on the tray (1) by means of a downflow weir (9) mounted at the said outlet (B).

8. The process as claimed in any preceding claim, characterised in that the flow parameters in said another zone (II) are brought about by means of vapour and/or gas jets injected into the liquid adjacent the said outlet downflow, said jets being oriented towards the interior of the tray (1) and having a horizontal component.

9. Apparatus for contacting a liquid with a vapour and/or a gas, e.g. for distillation and/or absorption columns, including a tray (1) comprising vapour or gas-transmitting apertures (6), a liquid inlet (A) and a liquid outlet (B) spaced from said inlet (A), the tray (1) being provided with liquid-accelerating means in a first zone (I) thereof nearer the said inlet (A) than said outlet (B), means (9, 60) for decelerating the liquid flow in a zone (II) of the tray (1) nearer the said outlet (B) than the said inlet (A), characterised in that the liquid-accelerating means are constituted by at least one row (12, 13) of apertures (3) transverse to the direction of liquid flow and formed in said tray (1); in that between the said inlet (A) and the said liquid decelerating means (9, 60) the said tray (1) is uniplanar and free of constructional elements tending to oppose the effect of the said accelerating means, and in that said apertures (3) each have a geometrical axis (y) inclined at a positive angle ($\alpha$) to the surface of the tray (1) and (when considered in top plan view) towards the said outlet (B).

10. Apparatus according to claim 9, characterised in that said liquid-accelerating means are supplemented by a slot (50) disposed in the said first zone (I) above the plane of the tray (1) adjacent the said inlet (A), the cross-sectional area of said slot (50) being selected to cause the velocity of flow in use to exceed a predetermined minimum value.

11. Apparatus as claimed in claim 9 or 10, characterised in that the said liquid-accelerating means (3) are formed by eyes situated below, or extending up to the upper plane of, the tray (1).

12. Apparatus as claimed in claim 10, characterised in that it has at least two of said trays (1) in a mutually superposed relationship and in that the said slot (50) associated with the first (lower) tray is arranged between the lower edge of a downflow sheet (7) of a second tray situated above the first tray (1) and the plane of the first tray (1), or in a downflow sheet directly above the plane of the first tray (1).

13. Apparatus as claimed in any of claims 9 to 12, characterised in that for use as said decelerating means it is provided with a downflow weir (9) extending above the plane of the tray (1) in the vicinity of the said outlet (B).

14. Apparatus as claimed in any of claims 9 to 12, characterised in that it is provided in the vicinity of the said outlet (B) with means (60), e.g. baffle elements (60) arranged above, or extending at most up to the upper plane of the tray, to constitute said decelerating means, for the induction of vapour and/or gas jets into the liquid, said jets having a suitable horizontal component and being directed oppositely to the direction of the main liquid flow direction.

15. Apparatus as claimed in any of claims 9 to 13, characterised in that there is a plurality of said rows (12; 13) the downstream-most of which (taken in the direction of the flow of liquid along the tray) is spaced from said outlet (B) by a distance which is only somewhat less than its distance from said inlet (A).

**Patentansprüche**

1. Verfahren, um eine Flüssigkeit und einen Dampf und/oder ein Gas an einem Boden miteinander zu kontaktieren, der dampf- oder gasdurchlassende Löcher aufweist, in deren Verlauf der Dampf und/oder das Gas nach oben in die über den Boden von einem Einlaß (A) zu einem Auslaß (B) strömende Flüssigkeit geleitet wird oder werden,
dadurch gekennzeichnet,
daß der Boden (1) uniplanar ist und in einer ersten Zone (I) des Bodens, die dem Flüssigkeitseinlaß (A) des Bodens näher ist als dem Auslaß (B), die Flüssigkeit (5) ausschließlich einer Beschleunigung auf eine Geschwindigkeit ausgesetzt ist, die die der in der Flüssigkeit aufgrund des Auftriebseffektes aufsteigenden Dampf- und/oder Gasblasen übersteigt, während in einer anderen Zone (II) des Bodens (1), die dem Auslaß (B) näher ist als dem besagten Einlaß (A), die Flüssigkeit auf eine Geschwindigkeit verzögert wird, die niedriger ist als die der besagten aufsteigenden Dampf- und/oder Gasblasen;
und des weiteren dadurch gekennzeichnet,
daß die Filmdicke ($h_2$) des Stromes in der besagten anderen Zone (II) die Filmdicke ($h_1$) der Flüssigkeit in der besagten ersten Zone (I) überschreitet.

**2.** Verfahren gemäß Anspruch 1,
dadurch gekennzeichnet,
daß die Flüssigkeit (5) in der besagten ersten Zone (I) auf eine Geschwindigkeit von wenigstens 0,1 m/s, vorzugsweise von wenigstens 0,3 m/s, beschleunigt wird.

**3.** Verfahren gemäß Anspruch 1 oder 2,
dadurch gekennzeichnet,
daß die beschleunigte Flüssigkeit (5) in einem Film ($h_1$) von maximal 1 - 10 mm Dicke geführt ist.

**4.** Verfahren gemäß einem der vorstehenden Ansprüche,
dadurch gekennzeichnet,
daß in der besagten ersten Zone (I) die Flüssigkeit beschleunigt wird, indem sie durch eine Reihe von Öffnungen (3) in besagtem Boden (1) einströmt, die quer zu der Richtung des Stromes auf dem besagten Boden (1) ist, wobei Besagte wenigstens eine Reihe von Öffnungen (3) dem besagten Einlaß (A) näher ist als dem besagten Auslaß (B); und daß die besagten Öffnungen (3) jeweils eine geometrische Achse (y) haben, die mit einem positiven Winkel ($\alpha$) zur Oberfläche des Bodens (1) ist und (falls in Aufsicht betrachtet) in Richtung auf den besagten Auslaß (B).

**5.** Verfahren gemäß einem der vorangehenden Ansprüche,
dadurch gekennzeichnet,
daß die Flüssigkeit (5), die auf den Boden (1) fließt, mittels der Hilfe eines Schlitzes (50), der in der besagten Einlaßzone (I) oberhalb der Ebene des Bodens (1) angeordnet ist, einer nachträglichen Beschleunigung unterzogen wird.

**6.** Verfahren gemäß einem der vorangehenden Ansprüche,
dadurch gekennzeichnet,
daß die Flüssigkeit mehrere Male an entsprechenden mehreren Orten, die entlang des Bodens (1) mit Abständen (k) zueinander zwischen dem besagten Einlaß (A), zum Beispiel einem Einlaßwehr (2), und dem besagten Auslaß (B) beabstandet angeordnet sind, beschleunigt wird.

**7.** Verfahren gemäß einem der vorstehenden Ansprüche,
dadurch gekennzeichnet,
daß die Strömungsparameter in der besagten anderen Zone (II) mittels eines Abströmwehres (9) auf den Boden (1) aufgebracht werden, das an dem besagten Auslaß (B) angeordnet ist.

**8.** Verfahren gemäß einem der vorhergehenden Ansprüche,
dadurch gekennzeichnet,
daß die Strömungsparameter in der besagten anderen Zone (II) mittels Dampf- und/oder Gasströmen aufgebracht werden, die in der Nähe des besagten Abströmauslasses in die Flüssigkeit eingespritzt werden, wobei die besagten Ströme auf dar Innere des Bodens (1) gerichtet sind und eine horizontale Komponente haben.

**9.** Vorrichtung um eine Flüssigkeit mit einem Dampf und/oder einem Gas zu kontaktieren, zum Beispiel für Destillations- und/oder Absorptionskolonnen, einen Boden (1) aufweisend, der dampf- oder gasdurchlassende Öffnungen (6) aufweist, einen Flüssigkeitseinlaß (A) und einen Flüssigkeitsauslaß (B), der zu dem besagten Einlaß (A) beabstandet ist, wobei der Boden (1) mit flüssigkeitsbeschleunigenden Mitteln in einer ersten Zone (I) versehen ist, die dem besagten Einlaß (A) näher ist als dem besagten Auslaß (B), sowie mit Mitteln (9, 60) um den Flüssigkeitsstrom in einer Zone (II) des Bodens (1) zu verzögern, die dem besagten Auslaß (B) näher ist als dem besagtem Einlaß (A),
dadurch gekennzeichnet,
daß die strömungsbeschleunigenden Mittel durch wenigstens eine Reihe (12, 13) von Öffnungen (3) gebildet sind, die quer zu der Richtung des Flüssigkeitsstromes in dem besagten Boden gebildet sind; daß zwischen dem besagten Einlaß (A) und den besagten verzögernden Mitteln (9, 60) der besagte Boden (1) uniplanar ist und frei von konstruktiven Elementen, die dem Effekt der besagten beschleunigenden Mittel entgegenwirken könnten, und daß die besagten Öffnungen (3) jeweils eine geometrische Achse (y) haben, die mit einem positiven Winkel ($\alpha$) zur Oberfläche des Bodens (1) und (falls in Aufsicht betrachtet) in Richtung des besagten Auslasses (B) geneigt ist.

**10.** Vorrichtung gemäß Anspruch 9,
dadurch gekennzeichnet,
daß die besagten flüssigkeitsbeschleunigenden Mittel durch einen Schlitz (50) ergänzt werden, der in der besagten ersten Zone (I) oberhalb der Ebene des Bodens (1) benachbart zum besagten Einlaß (A) angeordnet ist, wobei die Querschnittsfläche des besagten Schlitzes (50) so gewählt wird, daß die Strömungsgeschwindigkeit im Gebrauch einen vorbestimmten minimalen Wert überschreitet.

**11.** Vorrichtung gemäß Ansprüchen 9 oder 10, dadurch gekennzeichnet, daß die besagten flüssigkeitsbeschleunigenden Mittel (3) durch Augen gebildet werden, die unterhalb angeordnet sind oder sich bis zur oberen Ebene des Bodens (1) erstrecken.

**12.** Vorrichtung gemäß Anspruch 10, dadurch gekennzeichnet, daß sie wenigstens zwei der besagten Böden (1) in einer wechselseitig aufeinander geschichteten Relation aufweist und daß der besagte Schlitz (50), der dem ersten (niedrigerem) Boden zugeordnet ist, zwischen dem niedrigerem Ende eines Abströmbleches (7) eines zweiten Bodens, der über dem ersten Boden (1) angeordnet ist, und der Ebene des ersten Bodens (1) gebildet ist, oder in einem Abströmblech direkt oberhalb der Ebene des ersten Bodens (1).

**13.** Vorrichtung gemäß einem der Ansprüche 9 bis 12, dadurch gekennzeichnet, daß zur Benutzung als besagte Verzögerungselemente ein Abströmwehr (9) vorgesehen ist, das sich in der Nähe des besagten Auslasses (B) über die Ebene des Bodens (1) erstreckt.

**14.** Vorrichtung gemäß einem der Ansprüche 9 bis 12, dadurch gekennzeichnet, daß es in der Nähe des besagten Auslasses (B) mit Mitteln (60) versehen ist, zum Beispiel Leitblechelementen (60), die oberhalb angeordnet sind, oder die sich fast bis zu der oberen Ebene des Bodens erstrecken, um die besagten Verzögerungselemente zu bilden, für die Einführung von Dampf- und/oder Gasströmen in die Flüssigkeit, wobei diese besagten Ströme eine geeignete horizontale Komponente aufweisen und entgegen der Hauptflüssigkeitsströmungsrichtung gerichtet sind.

**15.** Vorrichtung gemäß einem der Ansprüche 9 bis 13, dadurch gekennzeichnet, daß es mehrere der besagten Reihen (12, 13) gibt, von denen die am weitesten stromabwärts liegende (bezogen auf die Strömungsrichtung der Flüssigkeit über den Boden) zu dem besagten Auslaß (B) mit einem Abstand beabstandet ist, der nur geringfügig geringer ist als ihr Abstand vom besagten Einlaß (A).

**Revendications**

**1.** Un procédé de mise en contact d'un liquide et d'une vapeur et/ou d'un gaz sur un plateau muni de trous de transmission de vapeur ou de gaz, au cours duquel la vapeur et/ou le gaz sont menés vers le haut pour s'introduire dans le liquide qui s'écoule transversalement sur le plateau d'une entrée (A) jusqu'à une sortie (B), caractérisé en ce que le plateau (1) est réalisé en un seul plan et dans une première zone (I) de celui-ci, plus proche de l'entrée du liquide (A) du plateau que de la sortie (B) du liquide (5), est soumis exclusivement à une accélération pour atteindre une vitesse qui dépasse celle des bulles de vapeur et/ou de gaz qui remontent dans le liquide par l'effet de flottation pendant que, dans une autre zone (II) du plateau (1) se trouvant plus proche de la sortie (B) que de ladite entrée (A), le liquide est décéléré afin d'atteindre une vitesse inférieure à celle des bulles de vapeur et/ou de gaz ascendantes; et caractérisé en plus en ce que l'épaisseur ($h_2$) de la couche de l'écoulement dans ladite autre zone (II) dépasse l'épaisseur de couche ($h_1$) du liquide dans ladite première zone (I).

**2.** Le procédé selon la revendication 1, caractérisé en ce que le liquide (5) est accéléré à une vitesse d'au moins 0,1 m/s, de préférence d'au moins 0,3 m/s, dans ladite première zone (I).

**3.** Le procédé selon la revendication 1 ou 2, caractérisé en ce que le liquide (5) accéléré est guidé dans une couche ($h_1$) d'une épaisseur maximale de 1 à 10 mm.

**4.** Le procédé selon l'une quelconque des revendications précédentes, caractérisé en ce que dans ladite première zone (I) le liquide est accéléré en le faisant passer par au moins une rangée d'ouvertures (3) dans ledit plateau (1) disposée transversalement à la direction d'écoulement sur ledit plateau (1), ladite rangée, au moins une rangée d'ouvertures (3), étant disposée plus proche de l'entrée (A) que de ladite sortie (B); et en ce que lesdites ouvertures (3) possèdent chacune un axe géométrique (y) ayant un angle d'inclinaison ($\alpha$) positif par rapport à la surface du plateau (1) et (quand on le considère dans une vue prise de dessus) orienté vers ladite sortie (B).

**5.** Le procédé selon l'une quelconque des revendications précédentes, caractérisé en ce que le liquide (5) qui s'écoule sur le plateau (1) est soumis à une accélération supplémentaire à l'aide d'une fente (50) disposée dans ladite zone d'entrée (I) au-dessus du plan du plateau (1).

6. Le procédé selon l'une quelconque des revendications précédentes, caractérisé en ce que le liquide est accéléré une pluralité de fois en une pluralité correspondante de positions disposées de façon espacée le long du plateau (1) à des distances (k) les unes des autres entre ladite entrée (A), par exemple un déversoir d'entrée (2), et ladite sortie (B).

7. Le procédé selon l'une quelconque des revendications précédentes, caractérisé en ce que les paramètres d'écoulement dans ladite autre zone (II) sont réalisés sur le plateau (1) au moyen d'un déversoir (9) à écoulement vers le bas monté à ladite sortie (B).

8. Le procédé selon l'une quelconque des revendications précédentes, caractérisé en ce que les paramètres d'écoulement dans ladite autre zone (II) sont réalisés au moyen de jets de vapeur et/ou de gaz qui sont injectés dans le liquide adjacent audit écoulement vers le bas à ladite sortie, lesdits jets étant orientés vers l'intérieur du plateau (1) et ayant une composante horizontale.

9. Dispositif pour la mise en contact d'un liquide avec une vapeur et/ou un gaz, par exemple pour des colonnes de distillation et/ou d'absorption, comprenant un plateau (1) muni d'ouvertures (6) de transmission de vapeur ou de gaz, une entrée (A) pour le liquide et une sortie (B) pour le liquide espacée par rapport à ladite entrée (A), le plateau (1) étant muni de moyens d'accélération du liquide dans une première zone (I) du plateau plus proche de ladite entrée (A) que de ladite sortie (B), des moyens (9, 60) pour freiner l'écoulement du liquide dans une zone (II) du plateau (1) plus proche de ladite sortie (B) que de ladite entrée (A), caractérisé en ce que les moyens d'accélération du liquide sont constitués d'au moins une rangée (12, 13) d'ouvertures (3) disposée transversalement à la direction de l'écoulement du liquide et formée dans ledit plateau (1), en ce qu'entre ladite entrée (A) et lesdits moyens (9, 60) de décélération du liquide, ledit plateau (1) est en forme d'un seul plan et est exempt d'éléments de construction ayant tendance à s'opposer aux effets desdits moyens d'accélération, et en ce que lesdites ouvertures (3) ont chacune un axe géométrique (y) incliné d'un angle (α) positif par rapport à la surface du plateau (1) et (en le considérant dans une vue de dessus), dirigé vers ladite sortie (B).

10. Dispositif selon la revendication 9, caractérisé en ce que lesdits moyens d'accélération du liquide sont aidés par une fente (50) disposée dans ladite première zone (I) au-dessus du plan du plateau (1) adjacente à ladite entrée (A), la surface de section de ladite fente (50) étant choisie afin de faire en sorte que la vitesse d'écoulement lors de l'utilisation dépasse une valeur minimale prédéterminée.

11. Dispositif selon la revendication 9 ou 10, caractérisé en ce que les moyens d'accélération du liquide (3) sont constitués d'ouvertures disposées en-dessous du, ou s'étendant jusqu'au plan supérieur du plateau (1).

12. Dispositif selon la revendication 10, caractérisé en ce qu'il est muni d'au moins deux desdits plateaux (1) qui sont superposés et en ce que ladite fente (50) associée au premier plateau (inférieur) est disposée entre le bord inférieur d'une paroi (7) d'écoulement vers le bas d'un deuxième plateau situé au-dessus du premier plateau (1) et le plan du premier plateau (1), ou dans une paroi d'écoulement vers le bas située directement en-dessous du plan du premier plateau (1).

13. Dispositif selon l'une quelconque des revendications 9 à 12, caractérisé en ce que pour l'utilisation en tant que dits moyens de décélération, le dispositif est muni d'un déversoir (9) à écoulement vers le bas qui fait saillie au-dessus du plan du plateau (1) dans la région de ladite sortie (B).

14. Dispositif selon l'une quelconque des revendications 9 à 12, caractérisé en ce qu'il est muni, dans la région de ladite sortie (B), de moyens (60), par exemple des éléments déflecteurs (60) disposés au-dessus, ou s'étendant au maximum, jusqu'au plan supérieur du plateau, afin de constituer lesdits moyens de décélération, pour l'admission de jets de vapeur et/ou de gaz dans le liquide, lesdits jets ayant une composante horizontale appropriée et étant dirigés en sens inverse à la direction de la direction principale d'écoulement du liquide.

15. Dispositif selon l'une quelconque des revendications 9 à 13, caractérisé en ce qu'il est muni d'une pluralité desdites rangées (12; 13) dont celle disposée plus en aval (dans la direction d'écoulement du liquide le long du plateau) est espacée de ladite sortie (B) d'une distance qui est quelque peu inférieure à son espacement par rapport à ladite entrée (A).

Fig.1

Fig.2

Fig.3

Fig. 4

Fig. 5

Fig.6